# EUROPEAN PATENT APPLICATION

(11) **EP 3 509 026 A1**
(43) Date of publication of application: **10.07.2019**
(21) Application number: 19150234.3
(22) Date of filing: 03.01.2019
(51) Int. Cl.: G06Q 20/04, G06Q 20/40

(54) **SYSTEM AND METHOD FOR PROCESSING A SCANNED CHEQUE**

(30) Priority: 06.01.2018 IN 201811000670
(71) Applicant: HCL Technologies Limited, 201 301 Uttar Pradesh (IN)
(72) Inventor: JAIN, Ritesh, Uttar Pradesh (IN); SINGH, Ajay, Uttar Pradesh (IN); GUPTA, Sugata, Dublin, D01 N279 (IE); SINGH, Rattan Deep, Uttar Pradesh (IN)
(74) Representative: Heinze, Ekkehard

(57) **Abstract**

The present disclosure relates to system(s) and method(s) for processing a scanned cheque. The system is configured for receiving a scanned cheque from a banking system, wherein the scanned cheque comprises a set of fields. Further, the system is configured for processing the scanned cheque using deep neural network for digitize the set of values. Further, the system is configured for applying a data processing algorithm on the digitized set of values to generate a set of processed values. Further, the system is configured for extracting a sub set of processed values, from the set of processed values, based on natural language processing of the set of processed values. Further, the system is configured for applying one or more validations, from a set of validations, on the sub set of processed values and transmit the sub set of processed values to the banking system thereby processing the scanned cheque.

## Description

### CROSS-REFERENCE TO RELATED APPLICATIONS AND PRIORITY

The present application claims benefit from Indian Complete Patent Application No. 201811000670, filed on 06 January 2018, the entirety of which is hereby incorporated by reference.

### TECHNICAL FIELD

The present disclosure in general relates to the field of image processing. More particularly, the present invention relates to a system and method for processing scanned cheques.

### BACKGROUND

Any financial organization that provides options for banking, cheque is a key product for financial transactions. Typically, there are two type of cheque processing namely inward clearing, outward clearing The products and offerings differ in complexity moving from one line of business to another.

Once a bank issues cheques to its customers, the customers further use these cheques to make payments to their vendors and other customers. For example, if the customer has account in XYZ bank and deposits a cheque of ABC bank, post depositing the cheque in account of XYZ bank, the XYZ bank will share the cheque to bank ABC digitally by scanning the cheque directly or via applicable regulatory platforms. Bank XYZ does the initial check processing and Bank ABC is supposed to process these cheques and provide the money to bank XYZ who further credits the money to its customers account. This processing at both banks includes manual efforts in fetching the details from scanned cheques such as, beneficiary name, amount, account number and signature verification and check the validity.

The manual steps in the cheque processing have a cost implication for the banks as well as lead delays for cheque processing which has its financial implications and impact customer experience.

### SUMMARY

Before the present systems and method for processing a scanned cheque is illustrated. It is to be understood that this application is not limited to the particular systems, and methodologies described, as there can be multiple possible embodiments that are not expressly illustrated in the present disclosure. It is also to be understood that the terminology used in the description is for the purpose of describing the particular versions or embodiments only, and is not intended to limit the scope of the present application. This summary is provided to introduce concepts related to systems and method for processing scanned cheques. This summary is not intended to identify essential features of the claimed subject matter nor is it intended for use in determining or limiting the scope of the claimed subject matter.

In another implementation, a system for processing a scanned cheque is illustrated. The system comprises a memory and a processor coupled to the memory, further the processor is configured to execute programmed instructions stored in the memory. In one embodiment, the processor may execute programmed instructions stored in the memory for receiving a scanned cheque from a banking system, wherein the scanned cheque comprises a set of fields. Further, the processor may execute programmed instructions stored in the memory for processing the scanned cheque using deep neural network to identify a set of values corresponding to the set of fields of the scanned cheque, and digitize the set of values corresponding to the set of fields. Further, the processor may execute programmed instructions stored in the memory for applying a data processing algorithm on the digitized set of values to generate a set of processed values. Further, the processor may execute programmed instructions stored in the memory for extracting a sub set of processed values, from the set of processed values, based on natural language processing of the set of processed values. Further, the processor may execute programmed instructions stored in the memory for applying one or more validations, from a set of validations, on the sub set of processed values. Finally, the processor may execute programmed instructions stored in the memory for transmitting the sub set of processed values to the banking system thereby processing the scanned cheque.

In one implementation, a method for processing a scanned cheque is illustrated. The method may comprise steps for receiving a scanned cheque from a banking system, wherein the scanned cheque comprises a set of fields. The method may further comprise steps for processing the scanned cheque using deep neural network to identify a set of values corresponding to the set of fields of the scanned cheque, and digitize the set of values corresponding to the set of fields. The method may further comprise steps for applying a data processing algorithm on the digitized set of values to generate a set of processed values. The method may further comprise steps for extracting a sub set of processed values, from the set of processed values, based on natural language processing of the set of processed values. The method may further comprise steps for applying one or more validations, from a set of validations, on the sub set of processed values. The method may further comprise steps for transmitting the sub set of processed values to the banking system thereby processing the scanned cheque.

In yet another implementation, a computer program product having embodied computer program for processing a scanned cheque is disclosed. The program may comprise a program code for receiving a scanned cheque from a banking system, wherein the scanned cheque comprises a set of fields. The program may comprise a program code for processing the scanned cheque using deep neural network to identify a set of values corresponding to the set of fields of the scanned cheque, and digitize the set of values corresponding to the set of fields. The program may comprise a program code for applying a data processing algorithm on the digitized set of values to generate a set of processed values. The program may comprise a program code for extracting a sub set of processed values, from the set of processed values, based on natural language processing of the set of processed values. The program may comprise a program code for applying one or more validations, from a set of validations, on the sub set of processed values. The program may comprise a program code for transmitting the sub set of processed values to the banking system thereby processing the scanned cheque.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to refer like features and components.
Figure 1 illustrates a network implementation of a system configured for processing a scanned cheque, in accordance with an embodiment of the present subject matter.
Figure 2 illustrates the system configured for processing a scanned cheque, in accordance with an embodiment of the present subject matter.
Figure 3 illustrates a method for processing a scanned cheque, in accordance with an embodiment of the present subject matter.

### DETAILED DESCRIPTION

Some embodiments of the present disclosure, illustrating all its features, will now be discussed in detail. The words "receiving", "processing", "applying", "extraction", "transmitting", and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a", "an" and "the" include plural references unless the context clearly dictates otherwise. Although any systems and methods similar or equivalent to those described herein can be used in procession scanned cheque, the exemplary, systems and method to process scanned cheque is now described. The disclosed embodiments of the system and method for processing scanned cheques are merely exemplary of the disclosure, which may be embodied in various forms.

Various modifications to the embodiment will be readily apparent to those skilled in the art and the generic principles herein may be applied to other embodiments. However, one of ordinary skill in the art will readily recognize that the present disclosure to process scanned cheque is not intended to be limited to the embodiments illustrated, but is to be accorded the widest scope consistent with the principles and features described herein.

The system is configured for automating the cheque instruction reading and place the data to banking system. The system is configured for analysing the cheque validity and place the extracted data on digital system. The system automates the process of cheque reading or processing for the users and analyses the data related to trade instruction. The system consists of a processor, memory, graphic processing unit card that are coupled with processor, machine learning module, Natural language processing unit and trading knowledge base, codes and banking ontology.

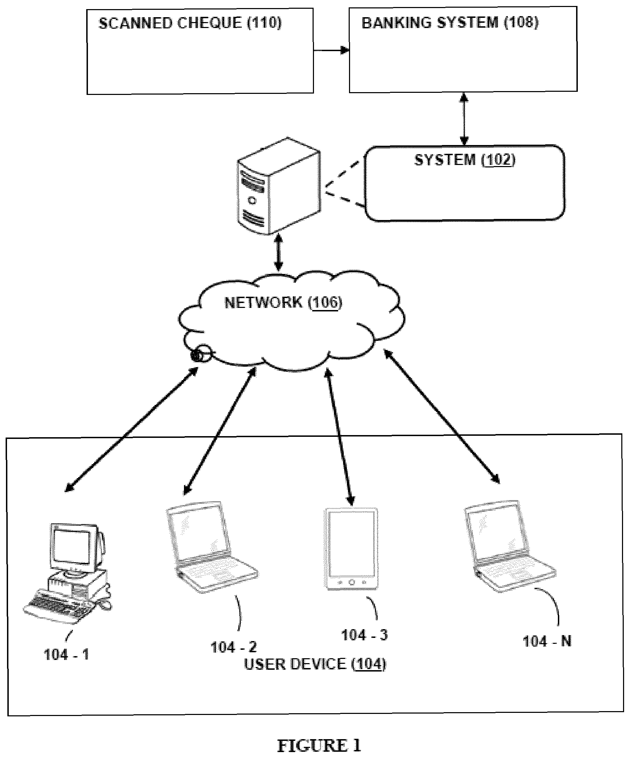

In another aspect of the present disclosure, a non-transitory computer readable medium is disclosed. The non-transitory computer readable medium includes instructions stored thereon that when processed by a processor to perform operations comprising retrieving information about the instructions from scanned copes of cheques, determining details such as account name, beneficiary name, amount based on the retrieved information, extract amount in words and figures to compare and validate, extract Date and validate if it's stale, extract beneficiary name to validate for AML purposes (if required), extracts signature for comparison with specimen signature, validate if there are any overwriting or cutting on the cheque. Further, the network implementation of system configured for processing a scanned cheque is illustrated with Figure 1.

Referring now to Figure 1, a network implementation 100 of a system 102 for processing a scanned cheque is disclosed. Although the present subject matter is explained considering that the system 102 is implemented on a server, it may be understood that the system 102 may also be implemented in a variety of computing systems, such as a laptop computer, a desktop computer, a notebook, a workstation, a mainframe computer, a server, a network server, and the like. In one implementation, the system 102 may be implemented over a server. Further, the system 102 may be implemented in a cloud network. The system 102 may further be configured to communicate with a banking system 108. The banking system 108 may be configured to manage transactions between different account holders. The banking system 108 may be configured to receive a cheque conducting a financial transaction. The banking system 108 may scan the cheque and transmit the scanned copy of the cheque to the system 102 for further processing. In one embodiment, the system 102 may be part of the banking system 108.

Further, it will be understood that the system 102 may be accessed by multiple users through one or more user devices 104-1, 104-2...104-N, collectively referred to as user device 104 hereinafter, or applications residing on the user device 104. Examples of the user device 104 may include, but are not limited to, a portable computer, a personal digital assistant, a handheld device, and a workstation. The user device 104 may be communicatively coupled to the system 102 through a network 106.

In one implementation, the network 106 may be a wireless network, a wired network or a combination thereof. The network 106 may be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Hypertext Transfer Protocol Secure(HTTPS), File Transfer Protocol(FTP), Transmission Control Protocol/Internet Protocol (TCP/IP), Wireless Application Protocol (WAP), and the like, to communicate with one another. Further, the network 106 may include a variety of network devices, including routers, bridges, servers, computing devices, storage devices, and the like.

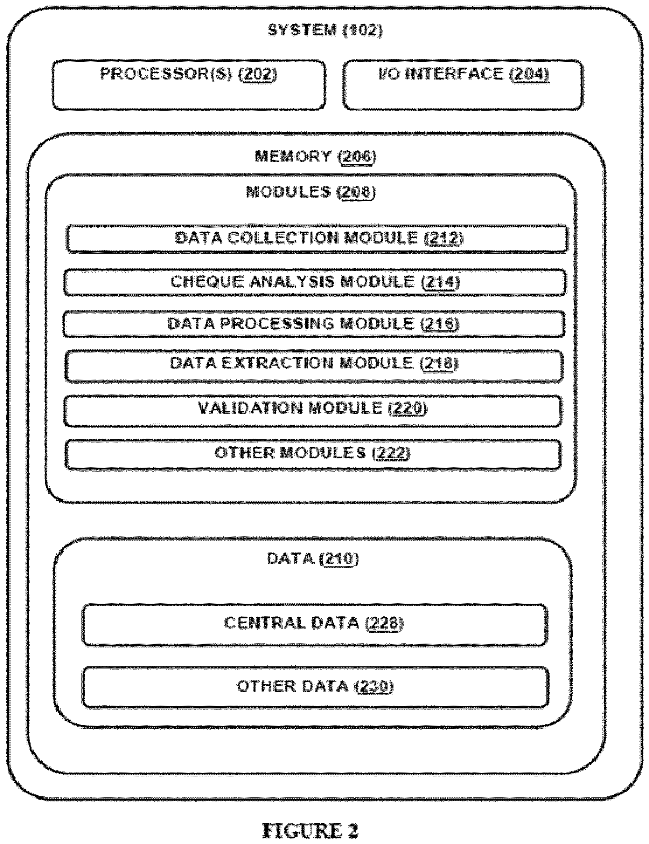

In one embodiment, the system 102 may be configured to receive a scanned cheque 110 from the banking system 108. Once the system 102 receives the scanned copy of the cheque, the system 102 is configured to process the scanned cheque 110 as described with respect to figure 2.

Referring now to figure 2, the system 102 configured for processing the scanned cheque 110 is illustrated in accordance with an embodiment of the present subject matter. In one embodiment, the system 102 may include at least one processor 202, an input/output (I/O) interface 204, and a memory 206. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, at least one processor 202 may be configured to fetch and execute computer-readable instructions stored in the memory 206.

The I/O interface 204 may include a variety of software and hardware interfaces, for example, a web interface, a graphical user interface, and the like. The I/O interface 204 may allow the system 102 to interact with the user directly or through the user device 104. Further, the I/O interface 204 may enable the system 102 to communicate with other computing devices, such as web servers and external data servers (not shown). The I/O interface 204 may facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 206 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 206 may include modules 208 and data 210.

The modules 208 may include routines, programs, objects, components, data structures, and the like, which perform particular tasks, functions or implement particular abstract data types. In one implementation, the module 208 may include a data collection module 212, a cheque analysis module 214, a data processing module 216, a Data Extraction module 218, a validation module 220, and other modules 222. The other modules 222 may include programs or coded instructions that supplement applications and functions of the system 102.

The data 210, amongst other things, serve as a repository for storing data processed, received, and generated by one or more of the modules 208. The data 210 may also include a central data 228, and other data 230. In one embodiment, the other data 230 may include data generated as a result of the execution of one or more modules in the other modules 220. In one implementation, a user may access the system 102 via the I/O interface 204. The user may be registered using the I/O interface 204 in order to use the system 102. In one aspect, the user may access the I/O interface 204 of the system 102 for obtaining information, providing input information or configuring the system 102. The functioning of all the modules in the system 102 is described as below:

### DATA COLLECTION MODULE 212

In one embodiment, the data collection module 212 may be configured for receiving the scanned cheque 110 from the banking system 108. The scanned copy 110 may be in the form of a PDF file or an image file. The scanned cheque 110 may comprises a set of fields. The set of fields may be blank spaces for entering handwritten or typed information by the check owner or pre-printed information. The set of fields may include a beneficiary name field, a date field, an amount is words field, an amount is numbers field, a signature field, a cheque number field, an account number field, a watermark field, a MICR (Magnetic ink character recognition) field, a bank name field, and an IFSC or IBAN code field and other microscopic features field. In one embodiment, fields such as date field, amount in number field and amount in words field, payee name field, and signature field could be handwritten or typed by the cheque owner. Furthermore, fields such as bank name field, account number field, cheque number field, watermark field, MICR (Magnetic ink character recognition) field, and IFSC or IBAN code field and other microscopic features field may be pre-printed on the cheque.

### CHEQUE ANALYSIS MODULE 214

In one embodiment, once the scanned cheque 110 is received, the cheque analysis module is configured to process the scanned cheque 110 using a Deep Neural Network (DNN) algorithm. The DNN algorithm may apply Optical Character Recognition (OCR) Algorithms or Intelligent Character Recognition (ICR) algorithms for identify a set of values corresponding to the set of fields of the scanned cheque and digitize the set of values corresponding to the set of fields. For example, the DNN algorithm may enable processing of the scanned cheque and extract the account number field from the scanned cheque. Further, the account number field may be processed using ICR or OCR technique to digitize the account number field (i.e. to extract the account number value from the field). In a similar manner, the set of values at each field from the set of fields may be extracted. In one embodiment, the set of digitized values may comprise a beneficiary name, a date, an amount is words, an amount is numbers, a signature, a cheque number, an account number, a watermark, a MICR (Magnetic ink character recognition), a bank name, an IFSC or IBAN code and other microscopic features. However, the accuracy of the extracted values largely depends on the computational efficiency of the OCR or ICR algorithm used in the process of digitization. In some cases, the OCR/ ICR algorithm may interpret incomplete or inaccurate values from the fields. In order to address this problem, the data processing module 216 is configured to further process the digitized set of values.

### DATA PROCESSING MODULE 216

In one embodiment, the data processing module 216 is configured for applying a data processing algorithm on the digitized set of values to generate a set of processed values. The data processing algorithm may enable ontology based correction and word embedding on each value, from the digitized set of values, to generate the set of processed values. For example, if the digitized field is amount in words field and if the ICR/ OCR algorithm detects the value as "one thous# only." On this case, the ontology based correction may be applied on this identified value. The ontology based correction may first identify the field as "amount in words" field. This field majorly contains numerical values, (i.e. one, thousand, lack, hundred, rupees, etc.). In the ontology based correction only the limited database (i.e. database with numerical descriptions) associated with that field is used for correcting the value in "amount in words" field. Based on the identified match, the word embedding may be performed to replace "thous#" with the term "thousand" since "thousand" is the perfect match for the inappropriately detected value. In a similar manner, the data processing module is configured to maintain a separate database corresponding o each field to apply ontology based correction and word embedding.

### DATA EXTRACTION MODULE 218

Further, the data extraction module 218 is configured for extracting a sub set of processed values, from the set of processed values, based on natural language processing techniques of the set of processed values. The data extraction module 218 extracts the data such as date, Beneficiary name, account number, Bank details such as name and code, amount written in words, amount written in numbers etc., using associated cheque specific keywords, metadata, formats, neighbourhood identification wherein the machine learning technique further uses a Long Short Term Memory (LSTM) by implementing Natural Language Processing techniques. The sub set of processed values are required for validation as well as processing the scanned cheque 110. For example, the sub set of processed values may include amount in words, amount in words, signature, account number, bank name, and other microscopic features.

### VALIDATION MODULE 220

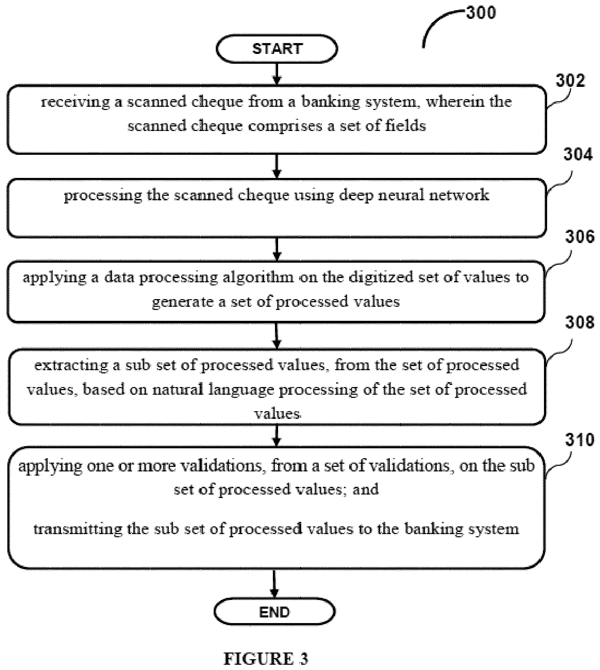

Further, the validation module 220 is configured to apply one or more validations, from a set of validations, on the sub set of processed values. The set of validation may comprise comparing the 'amount in words' with the 'amount in numbers' in order to confirm if the amount entered by the user is correct. Further, the validation module 220 may compare the signature with a signature stored in at the banking system to authenticate the user. Further, the validation module 220 may compare the account number with account number stored in at the banking system for execution the transaction. Further, the validation module 220 may compare the date with a current date to detect if the cheque has expired or not or due in future. Further, the validation module 220 may compare the other microscopic features with microscopic features stored in at the banking system for fraud detection. Further, the validation module 220 is configured to detect overwriting or cutting on the cheque. Further, the validation module 220 is configured to transmit the sub set of processed values to the banking system based on the validation. Further, method to process the scanned cheque is illustrated with respect to figure 3.

Referring now to figure 3, a method 300 for processing a scanned cheque, is disclosed in accordance with an embodiment of the present subject matter. The method 300 may be described in the general context of computer executable instructions. Generally, computer executable instructions can include routines, programs, objects, components, data structures, procedures, modules, functions, and the like, that perform particular functions or implement particular abstract data types. The method 300 may also be practiced in a distributed computing environment where functions are performed by remote processing devices that are linked through a communications network. In a distributed computing environment, computer executable instructions may be located in both local and remote computer storage media, including memory storage devices.

The order in which the method 300 is described is not intended to be construed as a limitation, and any number of the described method blocks can be combined in any order to implement the method 300 or alternate methods. Additionally, individual blocks may be deleted from the method 300 without departing from the spirit and scope of the subject matter described herein. Furthermore, the method 300 can be implemented in any suitable hardware, software, firmware, or combination thereof. However, for ease of explanation, in the embodiments described below, the method 300 may be considered to be implemented in the above described system 102.

At block 302, the data collection module 212 may be configured for receiving the scanned cheque 110 from the banking system 108. The scanned copy 110 may be in the form of a PDF file or an image file. The scanned cheque 110 may comprises a set of fields. The set of fields may be blank spaces for entering information by the check owner or pre-printed information. The set of fields may be blank spaces for entering handwritten or typed information by the check owner or pre-printed information. The set of fields may include a beneficiary name field, a date field, an amount is words field, an amount is numbers field, a signature field, a cheque number field, an account number field, a watermark field, a MICR (Magnetic ink character recognition) field, a bank name field, and an IFSC or IBAN code field and other microscopic features field. In one embodiment, fields such as date field, amount in number field and amount in words field, payee name field, and signature field could be handwritten or typed by the cheque owner. Furthermore, fields such as bank name field, account number field, cheque number field, watermark field, MICR (Magnetic ink character recognition) field, and IFSC or IBAN code field and other microscopic features field may be pre-printed on the cheque.

At block 304, once the scanned cheque 110 is received, the cheque analysis module is configured to process the scanned cheque 110 using a Deep Neural Network (DNN) algorithm. The DNN algorithm may apply Optical Character Recognition (OCR) Algorithms or Intelligent Character Recognition (ICR) algorithms for identify a set of values corresponding to the set of fields of the scanned cheque and digitize the set of values corresponding to the set of fields. For example, the DNN algorithm may enable processing of the scanned cheque and extract the account number field from the scanned cheque. Further, the account number field may be processed using ICR or OCR technique to digitize the account number field (i.e. to extract the account number value from the field). In a similar manner, the set of values at each field from the set of fields may be extracted. In one embodiment, the set of digitized values may comprise a beneficiary name, a date, an amount is words, an amount is numbers, a signature, a cheque number, an account number, a watermark, a MICR (Magnetic ink character recognition), a bank name, an IFSC or IBAN code and other microscopic features. However, the accuracy of the extracted values largely depends on the computational efficiency of the OCR or ICR algorithm used in the process of digitization. In some cases, the OCR/ ICR algorithm may interpret incomplete or inaccurate values from the fields. In order to address this problem, the data processing module 216 is configured to further process the digitized set of values.

At block 306, the data processing module 216 is configured for applying a data processing algorithm on the digitized set of values to generate a set of processed values. The data processing algorithm may enable ontology based correction and word embedding on each value, from the digitized set of values, to generate the set of processed values. For example, if the digitized field is amount in words field and if the ICR/ OCR algorithm detects the value as "one thous# only." On this case, the ontology based correction may be applied on this identified value. The ontology based correction may first identify the field as "amount in words" field. This field majorly contains numerical values, (i.e. one, thousand, lack, hundred, rupees, etc.). In the ontology based correction only the limited database (i.e. database with numerical descriptions) associated with that field is used for correcting the value in "amount in words" field. Based on the identified match, the word embedding may be performed to replace "thous#" with the term "thousand" since "thousand" is the perfect match for the inappropriately detected value. In a similar manner, the data processing module is configured to maintain a separate database corresponding o each field to apply ontology based correction and word embedding.

At block 308, the data extraction module 218 is configured for extracting a sub set of processed values, from the set of processed values, based on natural language processing techniques of the set of processed values. The data extraction module 218 extracts the data such as date, Beneficiary name, account number, Bank details such as name and code, amount written in words, amount written in numbers etc., using associated cheque specific keywords, metadata, formats, neighbourhood identification wherein the machine learning technique further uses a Long Short Term Memory (LSTM) by implementing Natural Language Processing techniques. The sub set of processed values are required for validation as well as processing the scanned cheque 110. For example sub set of processed values may include amount in words, amount in words, signature, account number, bank name, and other microscopic features.

At block 310, the validation module 220 is configured to apply one or more validations, from a set of validations, on the sub set of processed values. The set of validation may comprise comparing the 'amount in words' with the 'amount in numbers' in order to confirm if the amount entered by the user is correct. Further, the validation module 220 may compare the signature with a signature stored in at the banking system to authenticate the user. Further, the validation module 220 may compare the account number with account number stored in at the banking system for execution the transaction. Further, the validation module 220 may compare the date with a current date to detect if the cheque has expired or not or due in future. Further, the validation module 220 may compare the other microscopic features with microscopic features stored in at the banking system for fraud detection. Further, the validation module 220 is configured to detect overwriting or cutting on the cheque. Further, the validation module 220 is configured to transmit the sub set of processed values to the banking system based on the validation.

Although implementations for systems and methods for processing a scanned cheque has been described, it is to be understood that the appended claims are not necessarily limited to the specific features or methods described. Rather, the specific features and methods are disclosed as examples of implementations for predicting failure in a partner ecosystem.

## Claims

1. A system for processing a scanned cheque, the system comprising:
a memory; and
a processor coupled to the memory, wherein the processor is configured to execute programmed instructions stored in the memory for:
receiving a scanned cheque from a banking system, wherein the scanned cheque comprises a set of fields;
processing the scanned cheque using deep neural network to:
identify a set of values corresponding to the set of fields of the scanned cheque, and
digitize the set of values corresponding to the set of fields;
applying a data processing algorithm on the digitized set of values to generate a set of processed values;
extracting a sub set of processed values, from the set of processed values, based on natural language processing of the set of processed values;
applying one or more validations, from a set of validations, on the sub set of processed values; and
transmitting the sub set of processed values to the banking system thereby processing the scanned cheque.

2. The system of claim 1, wherein the set of fields include a beneficiary name field, a date field, an amount is words field, an amount is numbers field, a signature field, a cheque number field, an account number field, a watermark field, a MICR (Magnetic ink character recognition) field, a bank name field, and an IFSC or IBAN code field and other microscopic features field.

3. The system of claim 1, wherein each field, from the set of fields, is processed using deep neural network to identify the set of values, wherein the set of values comprise a beneficiary name, a date, an amount is words, an amount is numbers, a signature, a cheque number, an account number, a watermark, a MICR (Magnetic ink character recognition), a bank name, an IFSC code and other microscopic features.

4. The system of claim 1, wherein the data processing algorithm enables ontology based correction and word embedding on each value, from the digitized set of values, to generate the set of processed values.

5. The system of claim 1, wherein the set of validations comprise comparing the amount in words with the amount in numbers, comparing the signature with a signature stored in at the banking system, comparing the account number with account number stored in at the banking system, comparing the date with a current date, and comparing the other microscopic features with microscopic features stored in at the banking system for fraud detection.

6. A method for processing a scanned cheque, the method comprising steps of:
receiving, by a processor, a scanned cheque from a banking system, wherein the scanned cheque comprises a set of fields;
processing, by the processor, the scanned cheque using deep neural network to:
identify a set of values corresponding to the set of fields of the scanned cheque, and
digitize the set of values corresponding to the set of fields;
applying, by the processor, a data processing algorithm on the digitized set of values to generate a set of processed values;
extracting, by the processor, a sub set of processed values, from the set of processed values, based on natural language processing of the set of processed values;
applying, by the processor, one or more validations, from a set of validations, on the sub set of processed values; and
transmitting, by the processor, the sub set of processed values to the banking system thereby processing the scanned cheque.

7. The method of claim 6, wherein the set of fields include a beneficiary name field, a date field, an amount is words field, an amount is numbers field, a signature field, a cheque number field, an account number field, a watermark field, a MICR (Magnetic ink character recognition) field, a bank name field, and an IFSC or IBAN code field and other microscopic features field.

8. The method of claim 6, wherein each field, from the set of fields, is processed using deep neural network to identify the set of values, wherein the set of values comprise a beneficiary name, a date, an amount is words, an amount is numbers, a signature, a cheque number, an account number, a watermark, a MICR (Magnetic ink character recognition), a bank name, an IFSC code and other microscopic features.

9. The method of claim 6, wherein the data processing algorithm enables ontology based correction and word embedding on each value, from the digitized set of values, to generate the set of processed values.

10. The method of claim 6, wherein the set of validations comprise comparing the amount in words with the amount in numbers, comparing the signature with a signature stored in at the banking system, comparing the account number with account number stored in at the banking system, comparing the date with a current date, and comparing the other microscopic features with microscopic features stored in at the banking system for fraud detection.

11. A computer program product having embodied thereon a computer program for processing a scanned cheque, the computer program product comprises:
a program code for receiving a scanned cheque from a banking system, wherein the scanned cheque comprises a set of fields;
a program code for processing the scanned cheque using deep neural network to:
identify a set of values corresponding to the set of fields of the scanned cheque, and
digitize the set of values corresponding to the set of fields;
a program code for applying a data processing algorithm on the digitized set of values to generate a set of processed values;
a program code for extracting a sub set of processed values, from the set of processed values, based on natural language processing of the set of processed values;
a program code for applying one or more validations, from a set of validations, on the sub set of processed values; and
a program code for transmitting the sub set of processed values to the banking system thereby processing the scanned cheque.
